# EUROPEAN PATENT SPECIFICATION

(11) **EP 2 709 467 B1**
(45) Date of publication and mention of the grant of the patent: **20.07.2016**
(21) Application number: 12723401.1
(22) Date of filing: 03.05.2012
(51) Int. Cl.: A23L 33/00, A23G 3/42, A23L 7/117

(54) **BITE-SIZE NUTRITIONAL PRODUCTS HAVING A FILLING AND METHODS FOR USING SAME**
NAHRUNGSMITTELPRODUKTE IN BISSENFORM MIT EINER FÜLLUNG UND VERFAHREN ZU IHRER VERWENDUNG
PRODUITS NUTRITIONNELS FOURRÉS DE LA TAILLE D'UNE BOUCHÉE ET LEURS PROCÉDÉS D'UTILISATION

(30) Priority: 06.05.2011 US 201161483093 P; 14.09.2011 US 201161534442 P
(43) Date of publication of application: 26.03.2014
(73) Proprietor: Nestec S.A., 1800 Vevey (CH)
(72) Inventor: ROY, Marie, Georgina, F-25240 Chaux-Neuve (FR); THONNEY, Yves, Michel, CH-1936 Verbier (CH)
(74) Representative: Rupp, Christian
(86) International application number: PCT/EP2012/058129
(87) International publication number: WO 2012/152650

(56) References cited:
- EP-A1- 2 098 126
- WO-A1-03/079818
- US-A- 4 859 475
- US-A1- 2005 226 960
- US-A1- 2009 239 803
- US-B1- 6 248 375

## Description

### BACKGROUND

The present disclosure generally relates to compositions and methods for providing nutrition in a tasty and convenient manner. More specifically, the present disclosure is directed to bite-size nutritional products having a filling and methods for using same before, during and/or after exercising, or as a nutritious snack.

There are many types of nutritional compositions currently on the market. Nutritional compositions can be targeted toward certain consumer types, for example, young, elderly, athletic, etc., based on the specific ingredients of the nutritional composition. For example, it is well established that carbohydrate ingestion during or before exercise improves endurance performance, as well as shorter duration exercise. One manner in which to provide the proper amounts of carbohydrates required for endurance performance is in the form of a solid performance bar having a specific carbohydrate composition. Known performance bars, however, may be difficult to consume during exercise, may be too dense or heavy for consumption before or during exercise, or may have a chalky or bland taste. Additionally, these large bars may be physically bulky, awkward, and difficult to consume.

One goal of nutritional support, therefore, is to provide nutritional products that can very efficiently provide individuals with a delicious, healthy and nutritious bite-size snack, while at the same time providing a snack product that is easy to consume.

EP 2 098 126 A1 discloses a filling comprised by a dried food product, i.e. a carbohydrate bar, along with a crust.

### SUMMARY

The present disclosure relates to bite-size nutritional products having a dough portion and a filling. In an embodiment, the present disclosure is directed to a bite-size nutritional product having a dough portion including a carbohydrate source having a glucogenic:fructogenic carbohydrate ratio ranging between about 1.5 to about 2.5 with at least 60% of the energy content of the bite-size carbohydrate-based product coming from the carbohydrate source, and a filling encased by the dough portion.

In an embodiment, the dough portion further includes sodium. The sodium may be present in an amount that ranges from about 200 mg to about 400 mg of sodium per 100 g of the bite-size carbohydrate-based product.

In an embodiment, the dough portion further includes a component selected from the group consisting of a particulate, an active ingredient, a flavor, or combinations thereof The particulate may be selected from the group consisting of nut pieces, peanut meal, fruit pieces, oats, crispy cereal components, crumbs, flakes, breading, or combinations thereof. The active ingredient may be conjugated linoleic acid. The flavor may be selected from the group consisting of apple, apricot, banana, blueberry, bubble gum, caramel, cherry, chocolate, coconut, coffee, espresso, grape, hazelnut, lemon, lime, melon, mint, orange, peanut butter, pineapple, raspberry, strawberry, vanilla, watermelon, or combinations thereof.

In an embodiment, the filling is in a form selected from the group consisting of powder, paste, puree, gel, cream, dispersion, colloid, liquid, semi-liquid, or combinations thereof. The filling may be selected from the group consisting of jams, jellies, pastes, creams, purees, preserves, caramel, chocolate, yoghurt, or combinations thereof. In an embodiment, the filling provides from about 10% to about 20% by weight of the nutritional product. In an embodiment, the filling comprises about 15% by weight of the nutritional product.

In an embodiment, the filling may further include a component selected from the group consisting of a particulate, an active ingredient, a flavor, or combinations thereof The particulate may be selected from the group consisting of nut pieces, peanut meal, fruit pieces, oats, crispy cereal components, crumbs, flakes, breading, or combinations thereof. The active ingredient may be conjugated linoleic acid. The flavor may be selected from the group consisting of apple, apricot, banana, blueberry, bubble gum, caramel, cherry, chocolate, coconut, coffee, espresso, grape, hazelnut, lemon, lime, melon, mint, orange, peanut butter, pineapple, raspberry, strawberry, vanilla, watermelon, or combinations thereof.

In an embodiment, the nutritional product includes a coating. The coating may be a layer of a component selected from the group consisting of chocolate, peanut butter, yoghurt, or combinations thereof. The coating may further include a plurality of particulates selected from the group consisting of nuts, fruit, oats, crispy cereal crumbs, flakes, breading, or combinations thereof.

In an embodiment, the nutritional product further includes a fat, a fiber and a protein.

In an embodiment, the bite-size carbohydrate-based product has an energy content of about between about 30 kcal to about 45 kcal. In another embodiment, at least 70% of the energy content of the bite-size carbohydrate-based product comes from the carbohydrates.

In another embodiment, a bite-size protein-based product is provided. The product includes a dough portion having a protein source that provides the bite-size protein-based product with about 20% to about 40% protein by weight of the product, and a filling encased by the dough portion.

In an embodiment, the dough portion further includes a source of fat. The source of fat may provide about 25% of the energy of the bite-size protein-based product. The dough portion may further include a component selected from the group consisting of a particulate, an active ingredient, a flavor, or combinations thereof. The particulate may be selected from the group consisting of nut pieces, peanut meal, fruit pieces, oats, crispy cereal components, crumbs, flakes, breading, or combinations thereof. The active ingredient may be conjugated linoleic acid. The flavor may be selected from the group consisting of apple, apricot, banana, blueberry, bubble gum, caramel, cherry, chocolate, coconut, coffee, espresso, grape, hazelnut, lemon, lime, melon, mint, orange, peanut butter, pineapple, raspberry, strawberry, vanilla, watermelon, or combinations thereof.

In an embodiment, the filling is in a form selected from the group consisting of powder, paste, puree, gel, cream, dispersion, colloid, liquid, semi-liquid, or combinations thereof. The filling may be selected from the group consisting of jams, jellies, pastes, creams, purees, preserves, caramel, chocolate, yoghurt, or combinations thereof. In an embodiment, the filling provides from about 10% to about 20% by weight of the nutritional product. In an embodiment, the filling comprises about 15% by weight of the nutritional product.

In an embodiment, the filling may further include a component selected from the group consisting of a particulate, an active ingredient, a flavor, or combinations thereof. The particulate may be selected from the group consisting of nut pieces, peanut meal, fruit pieces, oats, crispy cereal components, crumbs, flakes, breading, or combinations thereof The active ingredient may be conjugated linoleic acid. The flavor may be selected from the group consisting of apple, apricot, banana, blueberry, bubble gum, caramel, cherry, chocolate, coconut, coffee, espresso, grape, hazelnut, lemon, lime, melon, mint, orange, peanut butter, pineapple, raspberry, strawberry, vanilla, watermelon, or combinations thereof.

In an embodiment, the nutritional product includes a coating. The coating may be a layer of a component selected from the group consisting of chocolate, peanut butter, yoghurt, or combinations thereof. The coating may further include a plurality of particulates selected from the group consisting of nuts, fruit, oats, crispy cereal crumbs, flakes, breading, or combinations thereof.

In an embodiment, the nutritional product further includes a fat, and a fiber.

In yet another embodiment, a bite-size protein-based product is provided. The product includes a dough portion having a protein source that provides the bite-size protein-based product with about 2 g to about 4 g of protein per bite-size protein-based product, and a filling encased by the dough portion.

In an embodiment, the nutritional product further includes a source of fat. The source of fat provides fat in an amount of up to about 9 g/300 cal per bite-size protein-based product. The source of fat may further provide saturated fat in an amount of up to about 4 g/300 cal per bite-size protein-based product.

In yet another embodiment, a bite-size nutritional product is provided. The product includes a dough portion having a carbohydrate source with a glucogenic:fructogenic carbohydrate ratio ranging between about 1.5 to about 2.5 with at least 60% of the energy content of the bite-size carbohydrate-based product coming from the carbohydrate source, a fruit filling, and a coating including fruit pieces.

In an embodiment, the nutritional product further includes sodium. The sodium ranges from about 200 mg to about 400 mg of sodium per 100 g of the bite-size carbohydrate-based product.

In still yet another embodiment, a method for providing nutrition to an athlete is provided. The method includes providing a bite-size carbohydrate-based product including a dough portion having a carbohydrate source with a glucogenic:fructogenic carbohydrate ratio ranging between about 1.5 to about 2.5 with at least 60% of the energy content of the bite-size carbohydrate-based product coming from the carbohydrate source, a filling encased by the dough portion, and sodium. The method further includes providing personalized guidelines for consuming the bite-size carbohydrate-based product, wherein the personalized guidelines provide the recommended amount of the bite-size carbohydrate-based product to consume before and during exercising based on at least one of a characteristic of the athlete and a training regimen of the athlete.

In an embodiment, the characteristic of the athlete is selected from the group consisting of weight, height, age, gender or combinations thereof.

In an embodiment, the training regimen is selected from the group consisting of running, swimming, cycling, hiking, football, basketball, baseball, soccer or combinations thereof.

In an embodiment, the personal guidelines are further based on the duration of the training regiment of the athlete.

In an embodiment, the training regimen is determined based on a sport.

In an embodiment, the training regimen is determined based on a personal objective. The personal objective may be selected from the group consisting of weight-loss, muscle building or combinations thereof.

In an embodiment, the personalized guidelines provide the recommended amount of the bite-size carbohydrate-based product to consume after exercising during recovery based on at least one of the characteristic of the athlete and the training regimen of the athlete.

In yet another embodiment, a method for selling a bite-size carbohydrate-based product is provided. The method includes providing a plurality of bite-size carbohydrate-based products in a package, the bite-size carbohydrate-based products including a dough portion having a carbohydrate source with a glucogenic:fructogenic carbohydrate ratio ranging between about 1.5 to about 2.5 with at least 60% of the energy content of the bite-size carbohydrate-based product coming from the carbohydrate source, a filling encased by the dough portion, and sodium. The method further includes providing personalized guidelines for consuming the bite-size carbohydrate-based products, wherein the personalized guidelines provide the recommended amount of the bite-size carbohydrate-based product to consume before and during exercising, and selling the bite-size carbohydrate-based product package and the guidelines to an athlete.

In an embodiment, the personalized guidelines are based on at least one of a characteristic of the athlete and a training regimen of the athlete.

In another embodiment, a nutritional kit is provided and includes a plurality of bite-size carbohydrate-based products and personalized guidelines on how many of the bite-size carbohydrate-based products an athlete should consume before and during exercising. The bite-size carbohydrate-based products include a dough portion with a carbohydrate source comprising a glucogenic:fructogenic carbohydrate ratio ranging between about 1.5 to about 2.5 with at least 60% of the energy content of the bite-size carbohydrate-based product coming from the carbohydrate source, a filling encased by the dough portion, and sodium.

In an embodiment, a plurality of the bite-size carbohydrate-based products and the personalized guidelines are together in a package.

In an embodiment, the personalized guidelines provide the recommended amount of the bite-size carbohydrate-based product to consume before and during exercising based on a physical characteristic of the athlete.

In an embodiment, the personalized guidelines provide the recommended amount of the bite-size carbohydrate-based product to the athlete before and during exercising based on the training regimen of the athlete.

In still yet another embodiment, a method for enhancing the performance of an athlete is provided. The method includes providing a bite-size carbohydrate-based product including a dough portion having a carbohydrate source with a glucogenic:fructogenic carbohydrate ratio ranging between about 1.5 to about 2.5 with at least 60% of the energy content of the bite-size carbohydrate-based product coming from the carbohydrate source, a filling encased by the dough portion, and sodium. The method further includes providing personalized guidelines for consuming the bite-size carbohydrate-based product, wherein the personalized guidelines provide the recommended amount of the bite-size carbohydrate-based product to consume before the performance based on at least one of a characteristic of the athlete and a training regimen of the athlete.

In yet another embodiment, a method for improving recovery of an athlete after exercising is provided. The method includes providing a bite-size carbohydrate-based product including a dough portion having a carbohydrate source with a glucogenic:fructogenic carbohydrate ratio ranging between about 1.5 to about 2.5 with at least 60% of the energy content of the bite-size carbohydrate-based product coming from the carbohydrate source, a filling encased by the dough portion, and sodium. The method further includes providing personalized guidelines for consuming the bite-size carbohydrate-based product, wherein the personalized guidelines provide the recommended amount of the bite-size carbohydrate-based product to consume during recovery after exercising based on at least one of a characteristic of the athlete and a training regimen of the athlete.

In another embodiment, a method for providing nutrition to an athlete is provided. The method includes providing a bite-size protein-based product having a dough portion with a protein source that provides the bite-size protein-based product with about 20% to about 40% protein by weight of the product, and a filling encased by the dough portion. The method further includes providing personalized guidelines for consuming the bite-size protein-based product, wherein the personalized guidelines provide the recommended amount of the bite-size protein-based product to consume before exercising or during recovery after exercising based on at least one of a characteristic of the athlete and a training regimen of the athlete.

In an embodiment, the bite-size protein-based product has a substantially spherical shape and includes a diameter ranging from about 12 mm to about 35 mm. The bite-size protein-based product may weighs from about 5 grams to about 25 grams.

In an embodiment, the bite-size protein-based product includes a protein blend including soy protein isolates, whey protein isolates and calcium caseinate. The products may include an amount of protein above 15% by weight together with less than 10% saturated fat by weight of the protein-based product.

In still yet another embodiment, a method for selling a bite-size protein-based product is provided. The method includes providing a plurality of bite-size protein-based products in a package, the bite-size protein-based products including a dough portion having a protein source that provides the bite-size protein-based product with about 20% to about 40% protein by weight of the product, and a filling encased by the dough portion. The method further includes providing personalized guidelines for consuming the bite-size protein-based products, wherein the personalized guidelines provide the recommended amount of the bite-size protein-based product to consume before exercising and during recovery after exercising The method also includes selling the bite-size protein-based product package and the guidelines to an athlete.

In yet another embodiment, a nutritional kit includes a plurality of bite-size protein-based products in a package, the bite-size protein-based products including a dough portion having a protein source that provides the bite-size protein-based product with about 20% to about 40% protein by weight of the product, and a filling encased by the dough portion, and personalized guidelines on how many of the bite-size protein-based products an athlete should consume before exercising and during recovery after exercising.

In an embodiment, a plurality of the bite-size protein-based products and the personalized guidelines are together in a package.

In an embodiment, the personalized guidelines provide the recommended amount of the bite-size protein-based product to consume before exercising and during recovery after exercising based on a physical characteristic of the athlete.

In an embodiment, the personalized guidelines provide the recommended amount of the bite-size protein-based product to the athlete before exercising and during recovery after exercising based on the training regimen of the athlete.

In another embodiment, a method for enhancing the performance of an athlete is provided. The method includes providing a bite-size protein-based product including a dough portion having a protein source that provides the bite-size protein-based product with about 20% to about 40% protein by weight of the product, and a filling encased by the dough portion. The method further includes providing personalized guidelines for consuming the bite-size protein-based product, wherein the personalized guidelines provide the recommended amount of the bite-size protein-based product to consume before the performance based on at least one of a characteristic of the athlete and a training regimen of the athlete.

In yet another embodiment, a method for improving recovery of an athlete after exercising is provided. The method includes providing a bite-size protein-based product including a dough portion having a protein source that provides the bite-size protein-based product with about 20% to about 40% protein by weight of the product, and a filling encased by the dough portion. The method further includes providing personalized guidelines for consuming the bite-size protein-based product, wherein the personalized guidelines provide the recommended amount of the bite-size protein-based product to consume during recovery after exercising based on at least one of a characteristic of the athlete and a training regimen of the athlete.

An advantage of the present disclosure to provide improved nutritional products.

Another advantage of the present disclosure is to provide nutritional products that are both delicious and nutritious.

Yet another advantage of the present disclosure is to provide nutritional products that are easy to consume.

Still yet another advantage of the present disclosure is to provide nutritional products that are aesthetically appealing to consumers.

Another advantage of the present disclosure is to provide nutritional products that include a filling.

Another advantage of the present disclosure is to provide new methods for customized carbohydrate and/or protein intake before, during and/or after exercising.

Yet another advantage of the present disclosure is to provide a snack that includes a snack having a mix of chocolate and crispy cereal components with all of the natural goodness of fruits and nuts.

Still another advantage of the present disclosure is to provide an improved method for providing optimized energy and/or protein to an athlete before, during and/or after exercising.

Additional features and advantages are described herein, and will be apparent from, the following Detailed Description.

### BRIEF DESCRIPTION OF THE FIGURES

FIG. 1 illustrates a nutritional product in accordance with an embodiment of the present disclosure.
FIG. 2 illustrates a cross-sectional view of the nutritional product of FIG. 1 in accordance with an embodiment of the present disclosure.
FIG. 3 illustrates a package including nutritional products in accordance with an embodiment of the present disclosure.
FIG. 4 illustrates a package including nutritional products in accordance with an embodiment of the present disclosure.
FIG. 5 illustrates a package including nutritional products in accordance with an embodiment of the present disclosure.
FIG. 6 illustrates a package including nutritional products in accordance with an embodiment of the present disclosure.
FIG. 7 illustrates a package including nutritional products in accordance with an embodiment of the present disclosure.

### DETAILED DESCRIPTION

As used in this disclosure and the appended claims, the singular forms "a," "an" and "the" include plural referents unless the context clearly dictates otherwise. Thus, for example, reference to "a polypeptide" includes a mixture of two or more polypeptides, and the like.

As used herein, "about" is understood to refer to numbers in a range of numerals. Moreover, all numerical ranges herein should be understood to include all integer, whole or fractions, within the range.

As used herein the term "amino acid" is understood to include one or more amino acids. The amino acid can be, for example, alanine, arginine, asparagine, aspartate, citrulline, cysteine, glutamate, glutamine, glycine, histidine, hydroxyproline, hydroxyserine, hydroxytyrosine, hydroxylysine, isoleucine, leucine, lysine, methionine, phenylalanine, proline, serine, taurine, threonine, tryptophan, tyrosine, valine, or combinations thereof.

As used herein, the term "antioxidant" is understood to include any one or more of various substances such as beta-carotene (a vitamin A precursor), vitamin C, vitamin E, and selenium) that inhibit oxidation or reactions promoted by Reactive Oxygen Species ("ROS") and other radical and non-radical species. Additionally, antioxidants are molecules capable of slowing or preventing the oxidation of other molecules. Non-limiting examples of antioxidants include astaxanthin, carotenoids, coenzyme Q10 ("CoQ10"), flavonoids, glutathione, Goji (wolfberry), hesperidin, lactowolfberry, lignan, lutein, lycopene, polyphenols, selenium, vitamin A, vitamin C, vitamin E, zeaxanthin, or combinations thereof.

While the terms "individual" and "patient" are often used herein to refer to a human, the invention is not so limited. Accordingly, the terms "individual" and "patient" refer to any animal, mammal or human having or at risk for a medical condition that can benefit from the treatment.

As used herein, sources of ω-3 fatty acids include, for example, fish oil, krill, plant sources of ω-3, flaxseed, walnut, and algae. Examples of ω-3 fatty acids include, for example, α-linolenic acid ("ALA"), docosahexaenoic acid ("DHA"), eicosapentaenoic acid ("EPA"), or combinations thereof.

As used herein, the term "minerals" is understood to include boron, calcium, chromium, copper, iodine, iron, magnesium, manganese, molybdenum, nickel, phosphorus, potassium, selenium, silicon, tin, vanadium, zinc, or combinations thereof.

"Nutritional products," or "nutritional compositions," as used herein, are understood to include any number of optional additional ingredients, including conventional food additives (synthetic or natural), for example one or more acidulants, additional thickeners, buffers or agents for pH adjustment, chelating agents, colorants, emulsifies, excipient, flavor agent, mineral, osmotic agents, a pharmaceutically acceptable carrier, preservatives, stabilizers, sugar, sweeteners, texturizers, and/or vitamins. The optional ingredients can be added in any suitable amount. The nutritional products or compositions may be a source of complete nutrition or may be a source of incomplete nutrition.

As used herein the term "patient" is understood to include an animal, especially a mammal, and more especially a human that is receiving or intended to receive treatment, as it is herein defined.

The terms "protein," "peptide," "oligopeptides" or "polypeptide," as used herein, are understood to refer to any composition that includes, a single amino acids (monomers), two or more amino acids joined together by a peptide bond (dipeptide, tripeptide, or polypeptide), collagen, precursor, homolog, analog, mimetic, salt, prodrug, metabolite, or fragment thereof or combinations thereof. For the sake of clarity, the use of any of the above terms is interchangeable unless otherwise specified. It will be appreciated that polypeptides (or peptides or proteins or oligopeptides) often contain amino acids other than the 20 amino acids commonly referred to as the 20 naturally occurring amino acids, and that many amino acids, including the terminal amino acids, may be modified in a given polypeptide, either by natural processes such as glycosylation and other post-translational modifications, or by chemical modification techniques which are well known in the art. Among the known modifications which may be present in polypeptides of the present invention include, but are not limited to, acetylation, acylation, ADP-ribosylation, amidation, covalent attachment of a flavanoid or a heme moiety, covalent attachment of a polynucleotide or polynucleotide derivative, covalent attachment of a lipid or lipid derivative, covalent attachment of phosphatidylinositol, cross-linking, cyclization, disulfide bond formation, demethylation, formation of covalent cross-links, formation of cystine, formation of pyroglutamate, formylation, gamma-carboxylation, glycation, glycosylation, glycosylphosphatidyl inositol ("GPI") membrane anchor formation, hydroxylation, iodination, methylation, myristoylation, oxidation, proteolytic processing, phosphorylation, prenylation, racemization, selenoylation, sulfation, transfer-RNA mediated addition of amino acids to polypeptides such as arginylation, and ubiquitination. The term "protein" also includes "artificial proteins" which refers to linear or non-linear polypeptides, consisting of alternating repeats of a peptide.

Non-limiting examples of proteins include dairy based proteins, plant based proteins, animal based proteins and artificial proteins. Dairy based proteins may be selected from the group consisting of casein, caseinates, casein hydrolysate, whey, whey hydrolysates, whey concentrates, whey isolates, milk protein concentrate, milk protein isolate, or combinations thereof. Plant based proteins include, for example, soy protein (e.g., all forms including concentrate and isolate), pea protein (e.g., all forms including concentrate and isolate), canola protein (e.g., all forms including concentrate and isolate), other plant proteins that commercially are wheat and fractionated wheat proteins, corn and it fractions including zein, rice, oat, potato, peanut, and any proteins derived from beans, buckwheat, lentils, pulses, single cell proteins, or combinations thereof. Animal based proteins may be selected from the group consisting of beef, poultry, fish, lamb, seafood, or combinations thereof.

All dosage ranges contained within this application are intended to include all numbers, whole or fractions, contained within said range.

As used herein, the terms "treatment," "treat" and "to alleviate" include both prophylactic or preventive treatment (that prevent and/or slow the development of a targeted pathologic condition or disorder) and curative, therapeutic or disease-modifying treatment, including therapeutic measures that cure, slow down, lessen symptoms of, and/or halt progression of a diagnosed pathologic condition or disorder; and treatment of patients at risk of contracting a disease or suspected to have contracted a disease, as well as patients who are ill or have been diagnosed as suffering from a disease or medical condition. The term does not necessarily imply that a subject is treated until total recovery. The terms "treatment" and "treat" also refer to the maintenance and/or promotion of health in an individual not suffering from a disease but who may be susceptible to the development of an unhealthy condition, such as nitrogen imbalance or muscle loss. The terms "treatment," "treat" and "to alleviate" are also intended to include the potentiation or otherwise enhancement of one or more primary prophylactic or therapeutic measure. The terms "treatment," "treat" and "to alleviate" are further intended to include the dietary management of a disease or condition or the dietary management for prophylaxis or prevention a disease or condition.

As used herein the term "vitamin" is understood to include any of various fat-soluble or water-soluble organic substances (non-limiting examples include vitamin A, Vitamin B1 (thiamine), Vitamin B2 (riboflavin), Vitamin B3 (niacin or niacinamide), Vitamin B5 (pantothenic acid), Vitamin B6 (pyridoxine, pyridoxal, or pyridoxamine, or pyridoxine hydrochloride), Vitamin B7 (biotin), Vitamin B9 (folic acid), and Vitamin B12 (various cobalamins; commonly cyanocobalamin in vitamin supplements), vitamin C, vitamin D, vitamin E, vitamin K, K1 and K2 (i.e. MK-4, MK-7), folic acid and biotin) essential in minute amounts for normal growth and activity of the body and obtained naturally from plant and animal foods or synthetically made, pro-vitamins, derivatives, analogs.

The present disclosure relates generally to nutritional products and methods for providing nutrition to an athlete before, during and/or after exercising. For example, bite-size protein- or carbohydrate-based products can be specifically designed and provided to an athlete for customized protein/energy intake and portion control before, during and/or after exercising. The present disclosure also relates to nutritional products and methods for providing a great-tasting and nutritious snack for consumers who are health conscious but desire a snack that also tastes great.

### Carbohydrate-Based Nutritional Products

In an embodiment, the present disclosure provides a bite-size carbohydrate-based product, wherein a dough portion of the product is carbohydrate-based. The product includes a carbohydrate source having a glucogenic:fructogenic carbohydrate ratio ranging between about 1.5 to about 2.5 with at least 60% of the energy content of the bite-size carbohydrate-based product coming from the carbohydrate source. Along with the carbohydrate source, the bite-size carbohydrate-based product further includes a suitable amount of sodium. The sodium can range in an amount from about 200 mg to about 400 mg of sodium per 100 g of the bite-size carbohydrate-based product. In an embodiment, each of the bite-size carbohydrate-based products has an energy content of between about 20 kcal to about 45 kcal.

Applicant has found that a glucogenic:fructogenic carbohydrate ratio between about 1.5 and about 2.5 is optimum. When the ratio is within the cited range, it has been found that the availability of the energy (from carbohydrates) to the muscles is optimized. The glucidic sources of energy are quickly absorbed though the digestive,tract and transported to the muscles. It is speculated, without being bound by the theory, that such a ratio provides for an optimum utilization of the glucose (respectively fructose) receptors and transporters. With both pathways (glucose and fructose) being utilized optimally, a beneficial effect is observed in the availability of the sources of energy to the muscles. Also, it is speculated that the energy required to absorb and transport the molecules to the muscles is comparatively lowered.

In one embodiment, the glucogenic:fructogenic carbohydrate ratio is between about 1.7 and about 2.3. In other embodiments, the glucogenic:fructogenic carbohydrate ratio is between about 1.8 and about 2.2, between about 1.9 and about 2.1. In another embodiment, the glucogenic:fructogenic carbohydrate ratio is 2.0 or about 2.0. All references to percentages are percentages by weight unless otherwise stated.

The glucogenic:fructogenic carbohydrate ratio is the ratio obtained by dividing total number of glucose molecules over the total number of fructose molecules in a theoretical complete hydrolysis of all the carbohydrates present in the composition. For example, for a mix including 80% pure glucose and 20% pure fructose, the ratio of glucose/fructose = 80/20 = 4. For a 100% high fructose corn syrup (high fructose corn syrup contains 45% glucose and 55% fructose), the ratio of glucose/fructose = 45/55 = 0.8. For a 100% saccharose (= sucrose = 50% fructogenic carbohydrate 50% glucogenic carbohydrate), the ratio of glucose/fructose = 50/50 = 1. For a 50% saccharose and 50 % corn syrup [100% glucogenic carbohydrate], the ratio of glucose/fructose = (50 + 100) / 50 = 3.

The determination of the glucose and fructose carbohydrate content can be performed by any suitable conventional methods. For example, the total sugar can be determined by acid hydrolysis followed by a sugar profile analysis using chromatography.

The glucose and/or fructose may be provided in the form of fructogenic and/or glucogenic carbohydrates. In this specification, fructogenic carbohydrates are carbohydrates that upon theoretical total hydrolysis release at least one fructose molecule. Glucogenic carbohydrates are carbohydrates that upon theoretical total hydrolysis release at least one glucose molecule. Consequently, a carbohydrate can be both glucogenic and fructogenic (e.g., saccharose). In the bite-size carbohydrate-based products, glucogenic sources can also in the form of extruded cereal pieces, cereal flakes, flours and starches.

The carbohydrates may comprise or consist of monosaccharides, such as glucose or fructose as basic carbohydrate units. The monosaccharides may represent a part of disaccharides, such as sucrose, lactose, maltose or cellobiose. The monosaccharides such as glucose or fructose may also represent a part of oligosaccharides or polysaccharides. Preferred carbohydrate sources for the present invention are maltodextrins and/or dextrose.

The carbohydrate source may additionally include indigestible carbohydrates, in particular fibers. The carbohydrate fraction may include at least 30% glucose and fructose, preferably at least 50% glucose and fructose, and more preferably at least 85% glucose and fructose. In one embodiment of the present disclosure, the carbohydrate fraction of the bite-size carbohydrate-based product provides at least 60%, preferably at least 70% of the energy of the bite-size carbohydrate-based product (e.g., in the form of calories).

The bite-size carbohydrate-based product can be in a bite-size form and may have any suitable shape for ease of handling. For example, the bite-size carbohydrate-based product can be substantially in the shape of a sphere having a diameter ranging from about 12 mm to about 35 mm. Preferably, the diameter of the sphere ranges from about 15 mm to about 25 mm.

In an embodiment, the bite-size carbohydrate-based product weighs from about 5 grams to about 25 grams. Preferably, each bite-size carbohydrate-based product can have a weight ranging from about 5 grams to about 15 grams. More preferably, each bite-size carbohydrate-based product can have a weight ranging from about 8 grams to 9 grams.

The bite-size carbohydrate-based product can also include additional ingredients. For example, the bite-size carbohydrate-based product can include one or more fats, fibers and/or proteins. In another embodiment, the bite-size carbohydrate-based product further includes oat flakes, whole crispies, natural fruits, or a combination thereof. In an alternative embodiment, the bite-size carbohydrate-based product includes one or more flavors and ingredients such as peanut butter, dark chocolate chips, oatmeal raisin, cranberry crunch, blueberry muesli, peach crumble, etc. The bite-size carbohydrate-based product can further have a crunchy texture. The additional ingredients may be present in a dough portion of the bite-size product, or in a filling or a coating of the bite-size product.

The presence of proteins and/or fats in the bite-size carbohydrate-based product of the present disclosure has the advantage in that it is possible to provide an athlete with a more complete nutrition during performance. For the protein source, any suitable dietary protein may be such as, for example, animal proteins (e.g., milk proteins, meat proteins and egg proteins); vegetable proteins (e.g., soy protein, wheat protein, rice protein, and pea protein); mixtures of free amino acids; or combinations thereof. Milk proteins, such as casein and whey milk proteins, and soy proteins are particularly preferred.

The proteins may be intact or hydrolysed or a mixture of intact and hydrolysed proteins. It may be desirable to supply partially hydrolysed proteins (degree of hydrolysis between 2 and 20%), for example for athletes believed to be at risk of developing cows' milk allergy. Generally, at least partially hydrolysed proteins are easier and faster to metabolize by the body. This is in particular true for amino acids.

If the bite-size carbohydrate-based product includes a fat source, the fat source has the advantage in providing for an improved mouth feel. Any fat source is suitable. For example, animal or plant fats may be used. To increase the nutritional value, ω3-unsaturated and ω6-unsaturated fatty acids may include the fat source. The fat source may also contain long chain fatty acids and/or medium chain fatty acids. For example, milk fat, canola oil, cocoa butter, almond butter, peanut butter, corn oil and/or high-oleic acid sunflower oil may be used.

The bite-size carbohydrate-based product can contain a discrete amount of carbohydrates in one or more bite-size products to provide any suitable amount of energy to an athlete. In an embodiment, the carbohydrate amount in the bite-size carbohydrate-based product can be based on a target of about 30 kcal to about 45 kcal in each single bite-size carbohydrate-based product. Moreover, the bite-size carbohydrate-based product can be made so that there is a consistent and countable quantity of calories per single bite-size carbohydrate-based product serving size.

### Protein-Based Nutritional Products

In another embodiment, the dough of the bite-size nutritional products are protein-based, instead of carbohydrate-based. For example, bite-size nutritional products can be specifically designed and provided to an athlete for customized protein intake and portion control. The bite-size nutritional products can have a sweet taste and be highly concentrated in protein. In addition, the bite-size nutritional products can meet both qualitative (e.g., a tri-source protein blend) and quantitative (e.g., fixed and regular amounts of protein per bite-size) protein requirements.

As with the bite-size carbohydrate-based product, the bite-size protein-based product can have any suitable shape for ease of handling. In an embodiment, the bite-size protein-based product has a substantially spherical shape. For example, the bite-size protein-based product can be in the shape of a sphere having a diameter ranging from about 12 mm to about 35 mm. Preferably, the diameter of the sphere ranges from about 15 mm to about 25 mm.

In an embodiment, each of the bite-size protein-based products weighs from about 5 grams to about 25 grams. Preferably, each bite-size protein-based product can have a weight ranging from about 5 grams to about 15 grams. More preferably, each bite-size protein-based product can have a weight ranging from about 8 grams to 9 grams. A typical serving can include, for example, several of the bite-size protein-based products, which can provide a total of about 250 to about 320 kcal.

The distinct size of the bite-size protein-based products provides a portability to the bite-size protein-based products. In addition, the size also makes it more convenient for the bite-size protein-based product to be eaten in discrete portion control amounts depending on the guidelines for the athlete. For example, the servings or the amount of the bite-size protein-based products that the athlete should consume before, during and/or after exercising can be easily adjusted depending the number of bite-size protein-based products needed for a specific protein requirement according to the guidelines.

The bite-size protein-based product can contain a discrete amount of protein in one or more bite-size products to provide any suitable amount of protein to an athlete. The percentage of energy (e.g., in the form of calories) coming from protein can range up to 30%.

In an embodiment, the bite-size protein-based product includes an amount of protein ranging from about 20% to about 40% by weight of the bite-size protein-based product. In another embodiment, the bite-size protein-based product includes an amount of protein of about 30% by weight of the bite-size protein-based product. Moreover, the bite-size protein-based product can be made so that there is a consistent and countable quantity of protein per single bite-size protein-based product, for example, between about 2 grams to about 4 grams per bite-size protein-based product. Preferably, the bite-size protein-based product includes a protein content of about 2 grams to about 2.5 grams.

The bite-size protein-based product can also contain a discrete amount of fat in one or more bite-size products to provide any suitable amount of energy to an athlete. For example, each of the products can provide a fat amount up to 9 g/300 cal. Each of the products can also provide a saturated fat amount up to 4 g/300 cal. In an embodiment, the percentage of energy (e.g., in the form of calories) coming from fat can be up to about 25%.

In an embodiment, the bite-size protein-based product includes an amount of fat ranging from about 10% to about 40% by weight of the bite-size protein-based product. Preferably, the bite-size protein-based product includes an amount of fat of about 30% by weight of the bite-size protein-based product.

The fat source has the advantage in providing for an improved mouth feel. Any fat source is suitable. For example, animal or plant fats may be used. To increase the nutritional value, ω3-unsaturated and ω6-unsaturated fatty acids may include the fat source. The fat source may also contain long chain fatty acids and/or medium chain fatty acids. For example, milk fat, canola oil, almond butter, peanut butter, corn oil and/or high-oleic acid sunflower oil may be used.

Specific ranges of the protein amounts in combination with the fat amounts of the bite-size protein-based product can also be advantageous in providing precise protein requirements to the athlete. In an embodiment, the bite-size protein-based product includes an amount of protein above 15% by weight together with an amount of saturated fat that is less than 10% by weight of the protein-based product.

Any suitable proteins or blends of proteins can be used. For example, the bite-size protein-based product can include a protein blend including soy protein isolates, whey protein isolates and calcium caseinate. An example of the protein blend is the Tri-source™ protein blend.

The presence of proteins and/or fats in the nutritional product of the present disclosure has the advantage in that it is possible to provide an athlete with a more complete nutrition during performance. For the protein source, any suitable dietary protein may be such as, for example, animal proteins (e.g., milk proteins, meat proteins and egg proteins); vegetable proteins (e.g., soy protein, wheat protein, rice protein, and pea protein); mixtures of free amino acids; or combinations thereof. Milk proteins, such as casein and whey milk proteins, and soy proteins are particularly preferred.

The proteins may be intact or hydrolysed or a mixture of intact and hydrolysed proteins. It may be desirable to supply partially hydrolysed proteins (degree of hydrolysis between 2 and 20%), for example, for athletes believed to be at risk of developing cows' milk allergy. Generally, at least partially hydrolysed proteins are easier and faster to metabolize by the body. This is in particular true for amino acids. In an embodiment, the bite-size protein-based product contains single/essential amino acids such as, for example, L-leucine, L-valine and/or L-isoleucine.

Accordingly, it is clear that the nutritional products of the present disclosure may include a dough portion that is protein- or carbohydrate-based. The dough of the nutritional products of the present disclosure may also include particulates in the dough (e.g., fruit pieces, nuts, crispy cereal pieces, etc.), or may be of a consistent material. The dough of the nutritional products may also include active ingredients such as, for example, prebiotics, probiotics, fatty acids, amino acids, antioxidants, etc. The dough may also be a flavored dough including flavors such as, but not limited to, chocolate, peanut butter, fruit flavors, coffee, yoghurt, etc.

As mentioned briefly above, the nutritional products of the present disclosure may include a coating that may have a plurality of components. The coating can be provided for convenient and non-sticky handling of the bite-size protein-based product during consumption, can be added to a protein/fat core using any suitable methods such as, for example, panning or enrobing. Further, the nutritional products of the present invention can provide visual appeal to consumers by providing a coating having components of nutritious appeal such as, for example, fruit pieces.

The coating may include, for example, a layer of a chocolate coating, a layer of a peanut butter coating, a layer of a yoghurt coating, a flavored powder, a flavored paste, a flavored cream, nuts or pieces of nuts (e.g., peanut meal), fruit or pieces of fruit, oats or pieces of oats (e.g., quick oats, rolled oats, etc.), crispy cereal components or pieces of crispy cereal components (e.g., crispy rice), crumbs, flakes, breading, or any combination thereof. In an embodiment, the coating includes chocolate, for example, in the form of a chocolate shell to prevent shape loss. The coating can include two different chocolates for visual differentiation. The coating can include different flavors such as, but not limited to, peanut butter, cookie dough and vanilla yoghurt. Any solid particulates on the coating may be adhered to the nutritional products by placing them on, for example, a soft layer of a chocolate coating, a soft layer of peanut butter, or a soft layer of yoghurt. Additionally, any food-grade adhesive may also be used to secure any particulates as a coating on the nutritional products.

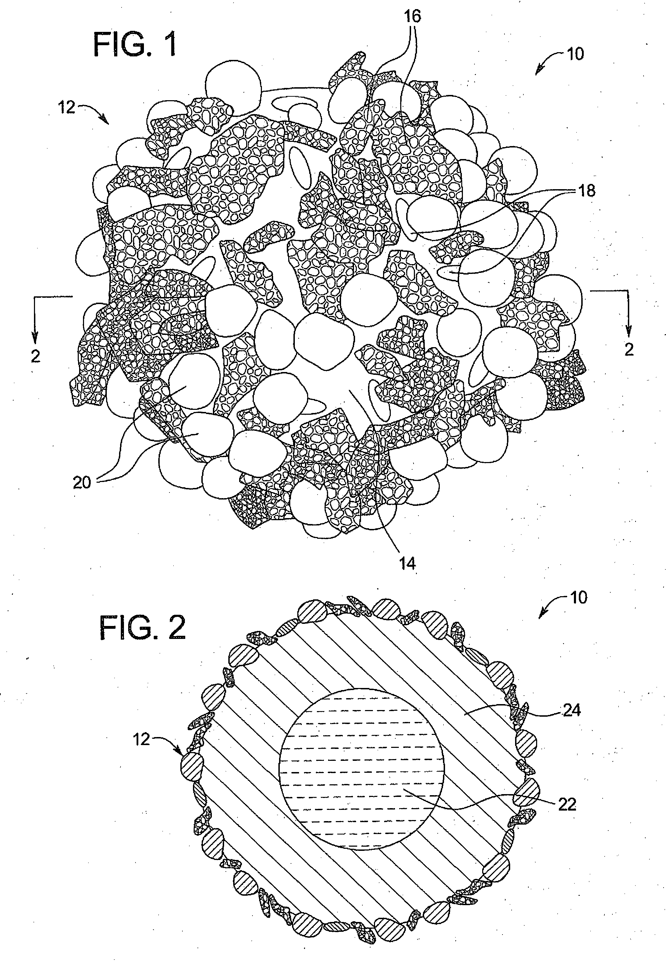

For example, as shown in FIG. 1, a nutritional product 10 is provided and includes a coating 12 that includes a plurality of components. In an embodiment, and as shown by FIG. 1, coating 12 includes a chocolate coating 14, fruit pieces 16, nut pieces 18, and crispy cereal pieces 20. The skilled artisan will immediately appreciate that nutritional product 10 need not have a plurality of components on a coating and may simply include chocolate coating 14, or simply fruit pierces 16 adhered to nutritional product 10 using a food grade adhesive.

As discussed above, the bite-size nutritional products of the present disclosure may include either a semi-liquid or a powder filling. Bite-size nutritional products having a semi-liquid filling provide several advantages over prior art bite-size products. For example, by providing a protein- or carbohydrate-based dough with a semi-liquid filling, the nutritional products can offer the consumer a wide range of tastes and textures. Additionally, the nutritional products can also offer new and appealing ways to provide the consumer with nutritious foods and/or active ingredients.

However, there are many technical challenges to preparing, for example, a semi-liquid filled nutritional product. One of these challenges is avoiding leakage of the semi-liquid filling, which requires the viscosity of the filling selected to be in a specific range. For example, if the viscosity of the filling is too low, the liquid may be prone to leak from nutritional product. On the other hand, if the viscosity of the filling is too high, there may be issues pumping the filling into the product during the pumping step of the filling. Applicant have found, however, one manner in which to deal with leakage. As will be discussed further below, Applicant has found that applying a layer of chocolate to a top of the semi-liquid filling helps to produce a center-filled nutritional product that does not leak. Although not wishing to be bound by any theories, Applicant believes that the rapidly-setting layer of chocolate may act as a protective shell.

Another challenge in manufacturing semi-liquid filled nutritional products is finding the optimal ratio of encasing dough to semi-liquid filling in order to guarantee that product will maintain its shape properly even during transportation and storage. Through research and testing, Applicant was able to determine such an optimal ratio. In an embodiment, the ratio is between 5% and 30%, or between about 10% to about 20%.

It is also important to guarantee a consistent feeding rate when manufacturing semi-liquid filled nutritional products. The consistent feeding rate is important to ensure the right composition and nutritional profile of the final product, especially if the filling includes any functional elements that have to be dosed very accurately and precisely such as, for example, such as vitamins, creatine, probiotics, etc. Providing functional ingredients into a semi-liquid filling is advantageous because it provides stability for some functional ingredients which are integrated directly in the filling itself instead of being put in the dough. Indeed, stability issues are well known when probiotics are put into a high water activity ("A_{w}") matrix, as is the case with regular energy or protein dough (e.g., between 0.45 and 0.65). As a consequence, adding the probiotics directly into a specific semi-liquid filling with a low A_{w} (e.g., fat-based filling with typical A_{w} ∼0.2) will allow to keep them in a stable and protective environment and to keep high concentration of probiotics during long time at ambient temperature.

Another technical difficulty associated with manufacturing semi-liquid filled nutritional products is water migration between the inner semi-liquid filling phase and the outer solid dough phase during the shelf-life of the product. In general, water migration between the two phases should be limited as much as possible. Indeed, Applicant has found that, for optimal results, the A_{w} for both the outer dough and the inner filling should be in a similar range, so that migration is kept at a low level. If this is not possible, then the outer dough should be formulated in a way that the water migration is anticipated to ensure an acceptable product through-out shelf-life.

Poor texture is another potential drawback that must be overcome when manufacturing bite-size nutritional products. For example, many currently marketed plain bite-size nutritional products are observed to be hard in texture, and become even harder during shelf-life due to normal aging of the dough. In contrast, a semi-liquid filled nutritional product may improve the texture of a hard texture product by combining it with a softer texture product, which helps to achieve an overall more desirable sensation in the mouth. In this manner, adding a small proportion of a semi-liquid filling to a dough-based product can help to achieve a softer nutritional product when compared to currently marketed plain bites.

Further, semi-liquid filled nutritional products require a good product protection when compared to regular bite-size products. In this regard, and due to the semi-liquid filling, semi-liquid filled nutritional products are more sensitive to pressure, as the filling is likely to leak away from the product if subject to a sufficient pressure. Therefore, specific care should be taken when not only designing packaging, but also when packaging semi-liquid filled nutritional products.

FIG. 2 illustrates a cross-section of nutritional product 10 of FIG. 1. As shown by FIG. 2, nutritional product 10 may include a filling 22 that is completely encased by dough 24, and coating 12. The filling could be any food grade powder, paste, puree, gel, cream, dispersion, colloid, liquid, or semi-liquid. In this manner, the skilled artisan will appreciate that the viscosity of the filling may be any known viscosity. In an embodiment, however, the filling of the present nutritional products is a semi-liquid filling. In other embodiments, the filling may be jams, jellies, pastes, creams, purees, preserves, caramel, chocolate, yoghurt, etc. The filling can also have any known flavor and may be of a constant consistency or include particulates. For example, the filling can have any known flavor including, but not limited to, apple, apricot, banana, blueberry, bubble gum, caramel, cherry, chocolate, coconut, coffee, espresso, grape, hazelnut, lemon, lime, melon, mint, orange, peanut butter, pineapple, raspberry, strawberry, vanilla, watermelon, etc.

The nutritional products can include any known amount of the filling so long as the filling does not leak out of the dough containing the filling, and so long as the filling does not transfer too much moisture to the dough. In an embodiment, the filling could be from about 2% to about 50% by total weight of product. In another embodiment, the filling is from about 5% to about 40% of the product. In another embodiment, the filling is from about 10% to about 30% of the product. In another embodiment, the filling is from about 10% to about 20%. In another embodiment, the filling is about 15% of the nutritional product.

In an embodiment, the nutritional products of the present disclosure may also provide the consumer with a fast and delicious way to consume various functional or active ingredients. The active ingredients may be present in the nutritional product dough, or in the coating or filling, and may include ingredients such as, for example, fatty acids, vitamins, minerals, etc. In an embodiment, the active ingredient is conjugated linoleic acid ("CLA"). Providing an active ingredient in a bite-size nutritional product of precise size and containing a precise amount of the active ingredient will help the consumer to ingest the required amounts of the active ingredient necessary to achieve a certain physiological advantage (e.g., optimal athletic performance).

In an embodiment, and as discussed above, the nutritional products include a dough portion having a fruit jam, jelly or puree filling. In this embodiment, the nutritional product may further include a coating having fruit pieces adhered thereto to reinforce the consumer's visual and taste perception of the fruit. In this embodiment, the protein- or carbohydrate-based dough may also have a peanut butter flavor such that the peanut butter flavored dough in combination with a fruit jam, jelly or puree filling will invoke an image of a peanut butter and jelly sandwich in the mind of the consumer, in addition to the perceived taste. An example formulation for such a bite-size nutritional product includes about 46% by weight peanut butter flavored dough, about 11.5% grape jelly filling, about 19.5% chocolate coating, and about 23% breader. In this embodiment, the coating, or breader, may be crispy cereal pieces or crumbs.

In another embodiment, the nutritional products of the present disclosure include a dough portion having a caramel flavored filling with a milk chocolate coating. In yet another embodiment, the nutritional products may include an active ingredient (e.g., conjugated linoleic acid ("CLA")) in the dough or in the filling. Other non-limiting combinations include, for example, a dough having a peanut butter flavored filling with a milk chocolate coating; a dough having a strawberry yoghurt filling; and a peanut butter flavored dough having a chocolate flavored filling with a milk chocolate coating. The skilled artisan will appreciate that the combinations of doughs and fillings are not limited to those specifically disclosed herein and that any combination of doughs and fillings are supported by the present disclosure.

The nutritional products can be made using any suitable process (e.g., cold-extrusion). For example, semi-liquid filled nutritional products can be made using a three step manufacturing process involving: 1) bite forming, 2) product handling after forming and 3) product enrobing (e.g., with chocolate or sugar coating). The bite formation stage may be completed by coextruding the dough and filling using a coextruder and then processing the coextruded rope of dough and filling in a ball forming machine. The coextruder machine may be, for example, a Bosch^{®} RopeX series coextruder, or a similar coextruder, and the ball forming machine may be a Bosch^{®} WAK 0045 ball forming machine or a similar machine. The process may further include rolling the product in coating particulate after enrobing, or sprinkling particulates onto the product after enrobing.

The product forming step includes making a roll of a dough mass and cutting it into small pieces and forming them into spheres. Once formed, the product can be handled before enrobing (e.g., coating). Cooling down of the product is recommended to avoid product cold-flow. For example, special handling can be used to avoid the products from sticking together. The products can also be enrobed very quickly to avoid water picking and shape loss. The applied coating can be a way to prevent stickiness, hold the shape of the center mass and provide a hard, shiny and non-melting ball. Different coating methods are possible such as a chocolate panning (e.g., for hard core) and hard sugar panning (e.g., for softer core). As discussed above, the process may further include rolling the product in coating particulate after enrobing, or sprinkling particulates onto the product after enrobing. The particulates may be any of the particulates described herein above.

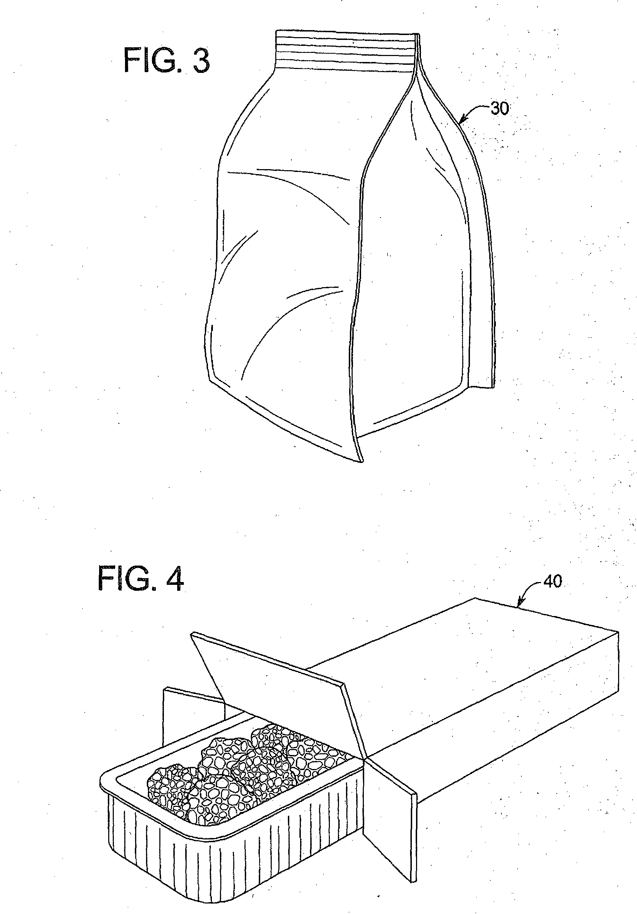

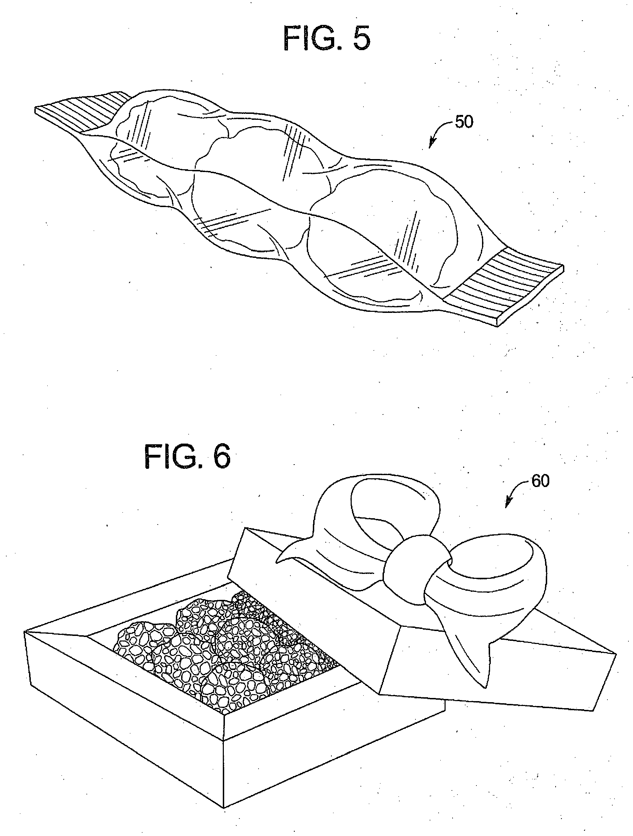

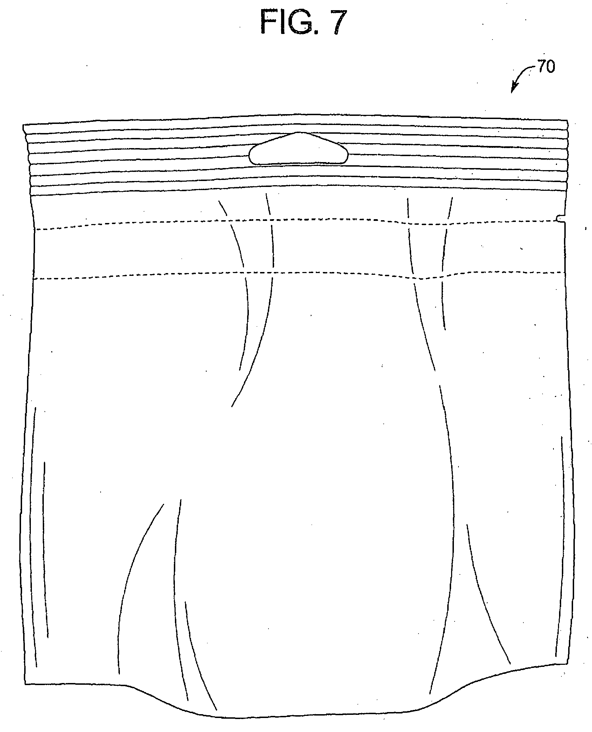

The nutritional products of the present disclosure may be packaged in any package known in the art. The nutritional products of the present disclosure may also be packaged according to intended means of consumption. For example, if the consumer wishes to buy a large package of a plurality of nutritional products to share with others, the nutritional products may be packaged in a bag 30, as shown in FIG. 3, or in a carton 40, as shown in FIG. 4. If the consumer wishes to consume the nutritional products on the go, the nutritional products may be packaged in a flow pack 50, as shown in FIG. 5, which may include from about 1 to about 5 of the nutritional products. Additionally, if the consumer wishes to purchase the nutritional products as a gift for another, the nutritional products may be included in a decorative carton box 60, as shown in FIG. 6. The nutritional products may also be included in a pouch 70 sized to include one or two servings of the nutritional products, as is shown in FIG. 7. In an embodiment, the bite-size carbohydrate-based products are not individually wrapped. In another embodiment, the bite-size carbohydrate-based products are individually wrapped. Preferably, there are between 8 and 10 individual bite-size carbohydrate-based products in each package in one embodiment.

Consumers of the present nutritional products could include people of all ages. For example, the nutritional products may be easily contained in a child's lunch box to provide a healthy and delicious snack for the child to consume during lunch or other school hours. Additionally, the entire family can enjoy the benefits of the present nutritional products, while at the same time emphasizing healthy, delicious snacking. Further, the nutritional products of the present disclosure may also be marketed as a premium gifting product that may be linked with various known retailers (e.g., chocolatiers), or various seasonal products (e.g., seasonal fruits included in the coating or in the filling).

In another embodiment, the present disclosure provides methods of providing nutrition to an athlete using customized or personal guidelines in conjunction with the bite-size carbohydrate- and/or protein-based products. The methods include providing a bite-size carbohydrate- or protein-based product and providing personalized guidelines for consuming the bite-size carbohydrate- or protein-based product. In an embodiment wherein the products are bite-size carbohydrate-based products, the products include a dough portion including a carbohydrate source having a glucogenic:fructogenic carbohydrate ratio ranging between about 1.5 to about 2.5 with at least 60% of the energy content of the bite-size carbohydrate-based product coming from the carbohydrate source, and a filling encased by the dough portion. The bite-size carbohydrate-based products may further include a suitable amount of sodium. In embodiments wherein the products are bite-size protein-based products, the products include a dough portion with a protein source that provides the bite-size protein-based product with about 20% to about 40% protein by weight of the product, and a filling encased by the dough portion. The bite-size carbohydrate- and/or protein-based products can also include additional components in embodiments as previously discussed.

The personalized guidelines provide the recommended amount (e.g., how many) of the bite-size carbohydrate- and/or protein-based products to consume before exercising, during exercising and/or during recovery after exercising based on one or more characteristics of the athlete and/or one or more training regimens of the athlete. The personal guidelines can also be based on the duration of the training regimen of the athlete.

The bite-size carbohydrate- and/or protein-based products allow for personalized and optimal dosing of carbohydrates and/or proteins for providing energy/nutrition to the athlete because of the size of the bite-size carbohydrate- and/or protein-based products. For example, the athlete can consume a specified number of bite-size carbohydrate-based products to.provide the right amount of energy to the athlete as set forth in the personalized guidelines. In another embodiment, the athlete can consume a specified number of bite-size protein-based products to provide the right amount of protein to the athlete as set forth in the personalized guidelines. In this manner, the portions of the bite-size carbohydrate- and/or protein-based products consumed by the athlete can be easily determined and monitored. In an embodiment, the intake amount (e.g., amount consumed) is guided by the characteristic(s) of the athlete, and the personalized guidelines specify different dosage amounts of the bite-size carbohydrate- and/or protein-based products for the athlete to consume.

To prepare the guidelines and determine what guidelines should be followed, the one or more characteristics of the athlete can be, by way of example, weight, height, age, gender, or a combination thereof. Any other physical characteristics of the athlete can also be used for determining the guidelines. The one or more training regimens can include, by way of example, running, swimming, cycling, hiking or any other type of individual sports or group sports (e.g., baseball, football, basketball, soccer, etc.).

The training regimen(s) can be determined based upon a personal objective of the athlete or consumer of the bite-size carbohydrate- and/or protein-based products. For example, the personal objective can be weight-loss, muscle building, endurance, physical fitness, etc.

In an embodiment, the personalized guidelines provide the recommended amount of the bite-size carbohydrate- and/or protein-based products for the athlete to consume during exercising based on at least one of the characteristics of the athlete and the training regimen of the athlete. The size of the bite-size carbohydrate- and/or protein-based products further provides ease of handling and dosing amount determination during the exercising.

The distinct size of the bite-size carbohydrate- and/or protein-based products provides a portability to the bite-size carbohydrate- and/or protein-based products. In addition, as previously discussed, the size also makes it more convenient for the bite-size carbohydrate- or protein-based products to be eaten in discrete portion control amounts depending on the guidelines for the athlete. For example, the servings or the amount of the bite-size carbohydrate- and/or protein-based products that the athlete should consume before, during and/or after exercising can be easily adjusted depending on the number of bite-size carbohydrate- and/or protein-based products needed for a specific energy/protein requirement according to the guidelines.

In another embodiment, the present disclosure provides methods for selling bite-size carbohydrate- or protein-based products. The methods include providing a plurality of bite-size carbohydrate- and/or protein-based products in a package and providing personalized guidelines for consuming the bite-size carbohydrate- and/or protein-based products. In an embodiment wherein the products are carbohydrate-based products, each of the bite-size carbohydrate-based products include a dough portion including a carbohydrate source having a glucogenic:fructogenic carbohydrate ratio ranging between about 1.5 to about 2.5 with at least 60% of the energy content of the bite-size carbohydrate-based product coming from the carbohydrate source, and a filling encased by the dough portion. The bite-size carbohydrate-based products can further include a suitable amount of sodium. In an embodiment wherein the products are bite-size protein-based products, each of the bite-size protein-based products include a dough portion including a protein source that provides the bite-size protein-based products with about 20% to about 40% protein by weight of the product, and a filling encased by the dough portion.

The personalized guidelines provide the recommended amount of the bite-size carbohydrate- or protein-based products to consume before and during exercising. The methods further include selling the bite-size carbohydrate- or protein-based product packages and the guidelines to an athlete. The personalized guidelines are based on one or more characteristics of the athlete and/or one or more training regimens of the athlete.

In an alternative embodiment, the present disclosure provides nutritional kits including a plurality of bite-size carbohydrate- or protein-based products and personalized guidelines on how many of the bite-size carbohydrate- and/or protein-based products an athlete should consume before and during exercising. A plurality of the bite-size carbohydrate- and/or protein-based products and the personalized guidelines can be kept together in a package.

The personalized guidelines of the nutritional kit can provide the recommended amount of the bite-size carbohydrate- and/or protein-based products to consume before and during exercising based on the body weight or other physical characteristics (e.g., weight, age, gender) of the athlete. In another embodiment, the personalized guidelines of the nutritional kit can provide the recommended amount of the bite-size carbohydrate- and/or protein-based products to the athlete before and during exercising based on the training regimen of the athlete.

In another embodiment, the present disclosure provides methods of enhancing the performance of an athlete. The methods include providing bite-size carbohydrate- or protein-based products and providing personalized guidelines for consuming the bite-size carbohydrate- or protein-based products. In an embodiment wherein the products are carbohydrate-based products, each of the bite-size carbohydrate-based products include a dough portion including a carbohydrate source having a glucogenic:fructogenic carbohydrate ratio ranging between about 1.5 to about 2.5 with at least 60% of the energy content of the bite-size carbohydrate-based product coming from the carbohydrate source, and a filling encased by the dough portion. The bite-size carbohydrate-based products can further include a suitable amount of sodium. In an embodiment wherein the products are bite-size protein-based products, each of the bite-size protein-based products include a dough portion including a protein source that provides the bite-size protein-based products with about 20% to about 40% protein by weight of the product, and a filling encased by the dough portion. The personalized guidelines provide the recommended amount of the bite-size carbohydrate- and/or protein-based products to consume before the performance based on at least one of a characteristic of the athlete and a training regimen of the athlete.

In an alterative embodiment, the present disclosure provides methods of improving recovery of an athlete after exercising. The methods include providing bite-size carbohydrate- and/or protein-based products and providing personalized guidelines for consuming the bite-size carbohydrate- and/or protein-based products. In an embodiment wherein the products are carbohydrate-based products, each of the bite-size carbohydrate-based products include a dough portion including a carbohydrate source having a glucogenic:fructogenic carbohydrate ratio ranging between about 1.5 to about 2.5 with at least 60% of the energy content of the bite-size carbohydrate-based product coming from the carbohydrate source, and a filling encased by the dough portion. The bite-size carbohydrate-based products can further include a suitable amount of sodium. In an embodiment wherein the products are bite-size protein-based products, each of the bite-size protein-based products include a dough portion including a protein source that provides the bite-size protein-based products with about 20% to about 40% protein by weight of the product, and a filling encased by the dough portion. The personalized guidelines provide the recommended amount of the bite-size carbohydrate- and/or protein-based products to consume during recovery after exercising based on at least one of a characteristic of the athlete and a training regimen of the athlete.

The bite-size, filled nutritional products of the present disclosure provide several benefits and advantages. For example, the nutritional products are perfect for snacking, provide the convenience of non-sticky, bite-size pieces, and are an ideal size and shape for a consumer to pop into his mouth. The present nutritional products also provide much flexibility in terms of aspect, ingredients, and nutritional and sensory profiles, and allow a consumer to enjoy chocolate pleasures without compromising on nutritional content. Additionally, the present nutritional products can provide a mix of chocolate and crispy cereals with all of the natural goodness of fruits and nuts.

### EXAMPLES

By way of example and not limitation, the following examples are illustrative of various embodiments of the present disclosure.

### EXAMPLE 1 Sample formulation

**Table 1: Bite-size protein-based peanut butter/chocolate nutritional product formulation**

| Description | Pct Qty-C |
|---|---|
| **DRY INGREDIENTS** | |
| SPI 980 GMO | 12.92 |
| MPI TNT 3000 | 2.72 |
| ULTRANOR TNT 4000 CAL/CSNTE | 1.36 |
| ACID CASEIN | 8.76 |
| LACTALBUMIN | 2.79 |
| LIGHT ROAST PEANUT FLOUR | 1.70 |
| FLN PEANUT BUTTER WONF | 0.85 |
| SALT FINE PREPARED FLOUR | 0.48 |
| **LIQUIDS** | |
| CORN SYRUP | 17.33 |
| INULIN/OLIGOFRUCTOSE SYRUP | 7.73 |
| FLN GYLCEROL | 5.71 |
| CREAMY PEANUT BUTTER | 3.75 |
| OIL, CANOLA, DRUM | 1.22 |
| PEANUT FLV | 0.31 |
| LECITHIN, SOYBEAN | 0.27 |
| YELLOW COLOR | 0.10 |
| **COATING** | |
| MILK CHOCOLATE | 16.00 |
| **BREADER** | |
| CHOCOLATE CRUMB | 10.75 |
| PEANUT MEAL | 5.25 |
| **TOTALS** | **100.00** |

### EXAMPLE 2 Sample formulation

**Table 2: Bite-size protein-based fudge brownie nutritional product formulation**

| **Description** | % |
|---|---|
| **CORE** | |
| *Dry* | |
| SPI 980 GMO | 13.30 |
| KERRYNOR ACID CASEIN A260 | 10.50 |
| COCOA, RED | 5.99 |
| WHEY PROTEIN CONC | 2.87 |
| MPI TNT 3000 | 2.80 |
| FRUCTOSE DRY | 2.45 |
| ULTRANOR TNT 4000 CAL/CSNTE | 0.70 |
| SALT FINE PREPARED FLOUR | 0.45 |
| *Liquid* | |
| EVAP CANE JUICE INVERT SYRUP | 14.70 |
| CORN SYRUP | 6.65 |
| FLN GYLCEROL | 6.65 |
| FLN FUDGE BROWNIE | 0.49 |
| FLN 'BAKED' FIRMENICH | 0.07 |
| OIL, CANOLA, DRUM | 1.40 |
| PEANUT BUTTER | 0.70 |
| LECITHIN, SOYBEAN | 0.28 |
| | |
| **MILK CHOCOLATE COATING** | 15.00 |
| | |
| **BREADER** | |
| CHOCOLATE CRUMB | 9.00 |
| CHOCOLATE FLAKES | 6.00 |
| | |
| **Total** | **100.00** |

### EXAMPLE 3 Sample formulation

**Table 3: Bite-size carbohydrate-based oatmeal/raisin nutritional product formulation**

| **Description** | % |
|---|---|
| **CORE** | |
| *Dry* | |
| MALTODEXTRIN | 14.56 |
| ULTRANOR MPI 9060 UM01/X150 | 7.835 |
| RAISIN | 7.41 |
| SOY CRISP RICE | 5.19 |
| FRUCTOSE DRY | 5.19 |
| OAT, ROLLED | 4.42 |
| CINNAMON | 0.75 |
| SALT FINE PREPARED FLOUR | 0.38 |
| LIGHT ROAST PEANUT FLOUR | 0.10 |
| *Liquid* | |
| EVAP CANE JUICE INVERT SYRUP | 23.10 |
| OIL, CANOLA, DRUM | 0.53 |
| FLN GYLCEROL | 0.53 |
| FLN OATMEAL RAISIN COOKIE | 0.02 |
| | |
| **MILK CHOCOLATE COATING** | |
| SUGAR | 7.88 |
| COCOA BUTTER | 3.23 |
| LIQUOR | 2.40 |
| NF DRY MILK | 0.81 |
| LACTALBUMIN | 0.30 |
| COCOA, RED | 0.27 |
| LECITHIN, SOYBEAN | 0.08 |
| PGPR | 0.03 |
| FLN VANILLA 2X | 0.02 |
| | |
| **BREADER** | |
| QUICK OATS / QUICK ROLLED OATS | 11.25 |
| CRISP RICE | 3.75 |
| | |
| **Total** | 100.00 |

### EXAMPLE 4 Sample formulation

**Table 4: Bite-size carbohydrate-based chocolate nutritional product formulation**

| Description | % |
|---|---|
| **CORE** | |
| *Dry* | |
| MALTODEXTRIN | 14.30 |
| SWT DR CRANBERRIES | 7.77 |
| COCOA, RED | 5.96 |
| ULTRANOR MPI 9060 UM01/X150 | 5.83 |
| FRUCTOSE DRY | 5.83 |
| SOY CRISP RICE | 5.44 |
| SALT FINE PREPARED FLOUR | 0.39 |
| LIGHT ROAST PEANUT FLOUR | 0.10 |
| **LIQUIDS** | |
| EVAP CANE JUICE INVERT SYRUP | 23.10 |
| FLN CRANBERRY WONF | 0.70 |
| OIL, CANOLA, DRUM | 0.22 |
| FLN GYLCEROL | 0.37 |
| **COATING** | |
| MILK CHOCOLATE | 15.00 |
| **BREADER** | |
| CHOCOLATE CRUMB | 9.00 |
| QUICK OATS / QUICK ROLLED OATS | 6.00 |
| **TOTALS** | **100.00** |

It should be understood that various changes and modifications to the presently preferred embodiments described herein will be apparent to those skilled in the art. Such changes and modifications can be made without departing from the scope of the present subject matter and without diminishing its intended advantages. It is therefore understood that such changes and modifications be covered by the appended claims.

## Claims

1. A bite-size carbohydrate-based product comprising: a dough portion having a carbohydrate source comprising a glucogenic:fructogenic carbohydrate ratio ranging between about 1.5 to about 2.5 with at least 60% of the energy content of the bite-size carbohydrate-based product coming from the carbohydrate source; and a filling encased by the dough portion, wherein the sodium ranges from about 200 mg to about 400 mg of sodium per 100 g of the bite-size carbohydrate-based product, wherein the filling is semi-liquid, and wherein the filling comprises from about 10% to about 20% by weight of the product.

2. The bite-size carbohydrate-based product according to Claim 1, wherein the dough portion, the filling or the dough portion and the filling individually further comprise at least one of: a fat, a fiber a protein, a particulate, an active ingredient, a flavor, and combinations thereof.

3. The bite-size carbohydrate-based product according to Claim 2, wherein the active ingredient is conjugated linoleic acid.

4. The bite-size carbohydrate-based product according to Claim 1, further comprising a coating.

5. The bite-size carbohydrate-based product according to Claim 4, the coating further comprising a plurality of particulates selected from the group consisting of nuts, fruit, oats, crispy cereal crumbs, flakes, breading, and combinations thereof.

6. The bite-size carbohydrate-based product according to Claim 1, wherein the bite-size carbohydrate-based product comprises an energy content of about between about 30 kcal to about 45 kcal, and wherein at least 70% of the energy content of the bite-size carbohydrate-based product comes from the carbohydrates.

7. The bite-size carbohydrate-based product according to Claim 1, wherein the dough portion has a protein source that provides the bite-size product with about 20% to about 40% protein by weight of the product.

8. The bite-size carbohydrate-based product according to Claim 2, wherein the protein source comprises a protein blend comprising soy protein isolates, whey protein isolates, calcium caseinate and combinations thereof.

9. The bite-size carbohydrate-based product according to Claim 1, the dough portion further comprising a source of fat, wherein the source of fat provides about 25% of the energy of the bite-size product.

10. The bite-size carbohydrate-based product according to Claim 1, the dough portion further comprising a source of fat, wherein the source of fat provides fat in an amount of up to about 9 g/300 cal per bite-size protein-based product.

11. The bite-size carbohydrate-based product according to Claim 1, wherein the dough portion has a protein source that provides the bite-size protein-based product with about 2 g to about 4 g of protein per bite-size protein-based product.

12. A method for providing nutrition to an athlete, the method comprising the steps of: providing a bite-size carbohydrate-based product comprising a dough portion comprising a carbohydrate source comprising a glucogenic:fructogenic carbohydrate ratio ranging between about 1.5 to about 2.5 with at least 60% of the energy content of the bite-size carbohydrate-based product coming from the carbohydrate source, a filling encased by the dough portion, and sodium; and providing personalized guidelines for consuming the bite-size carbohydrate-based product, wherein the personalized guidelines provide the recommended amount of the bite-size carbohydrate-based product to consume before and during exercising based on at least one of a characteristic of the athlete and a training regimen of the athlete, wherein the bite-size carbohydrate-based product is selected from the group consisting of those claimed in any of Claim 1 to Claim 11.

13. The method according to Claim 12, wherein the characteristic of the athlete is selected from the group consisting of weight, height, age, gender and combinations thereof.

14. The method according to Claim 12, wherein the training regimen is selected from the group consisting of running, swimming, cycling, hiking, football, basketball, baseball, soccer and combinations thereof.

15. The method according to Claim 12, wherein the personal guidelines are further based on the duration of the training regimen of the athlete.

16. The method according to Claim 12, wherein training regimen is determined based on a sport, or wherein training regimen is determined based on a personal objective.

17. The method according to Claim 16, wherein the personal objective is selected from the group consisting of weight-loss, muscle building and combinations thereof.

18. The method according to Claim 12, wherein the personalized guidelines provide the recommended amount of the bite-size carbohydrate-based product to consume after exercising during recovery based on at least one of the characteristic of the athlete and the training regimen of the athlete.

19. The method according to Claim 12, further comprising enhancing the performance of an athlete, or further comprising improving recovery of an athlete after exercising.

20. The method according to Claim 12, further comprising selling a bite-size carbohydrate-based product, the method further comprising the steps of: providing a plurality of bite-size carbohydrate-based products in a package, and selling the bite-size carbohydrate-based product package and the guidelines to an athlete.

21. A nutritional kit comprising a plurality of bite-size carbohydrate-based products and personalized guidelines on how many of the bite-size carbohydrate-based products an athlete should consume before and during exercising, the bite-size carbohydrate-based products comprising a dough portion comprising a carbohydrate source comprising a glucogenic:fructogenic carbohydrate ratio ranging between about 1.5 to about 2.5 with at least 60% of the energy content of the bite-size carbohydrate-based product coming from the carbohydrate source, a filling encased by the dough portion, and sodium, wherein the bite-size carbohydrate-product is selected from the group consisting of those claimed in any of Claim 1 to Claim 11.

22. The nutritional kit according to Claim 21, wherein the personalized guidelines provide at least one of:
the recommended amount of the bite-size carbohydrate-based product to consume before and during exercising based on a physical characteristic of the athlete; or
the recommended amount of the bite-size carbohydrate-based product to the athlete before and during exercising based on the training regimen of the athlete.

## Patentansprüche

1. Mundgerechtes Produkt auf Kohlenhydratbasis, das Folgendes umfasst: einen Teiganteil mit einer Kohlenhydratquelle, die ein Verhältnis von glukogenen:fructogenen Kohlenhydraten im Bereich von etwa 1,5 bis etwa 2,5 umfasst, wobei mindestens 60 % des Energiegehalts des mundgerechten Produkts auf Kohlenhydratbasis von der Kohlenhydratquelle stammt; und eine von dem Teiganteil umschlossene Füllung, wobei das Natrium im Bereich von etwa 200 mg bis etwa 400 mg Natrium pro 100 g des mundgerechten Produkts auf Kohlenhydratbasis liegt, wobei die Füllung halbflüssig ist und wobei die Füllung etwa 10 Gew.-% bis etwa 20 Gew.-% des Produkts ausmacht.

2. Mundgerechtes Produkt auf Kohlenhydratbasis nach Anspruch 1, wobei der Teiganteil, die Füllung oder der Teiganteil und die Füllung jeweils ferner mindestens eines der Folgenden umfassen: ein Fett, einen Ballaststoff, ein Protein, einen teilchenförmigen Inhaltsstoff, einen Wirkstoff, einen Geschmacksstoff und Kombinationen davon.

3. Mundgerechtes Produkt auf Kohlenhydratbasis nach Anspruch 2, wobei es sich bei dem Wirkstoff um konjugierte Linolsäure handelt.

4. Mundgerechtes Produkt auf Kohlenhydratbasis nach Anspruch 1, das ferner eine Beschichtung umfasst.

5. Mundgerechtes Produkt auf Kohlenhydratbasis nach Anspruch 4, wobei die Beschichtung ferner eine Vielzahl von teilchenförmigen Inhaltsstoffen, ausgewählt aus der Gruppe bestehend aus Nüssen, Obst, Haferflocken, knusprigen Getreideflocken, Flocken, Brotkrümeln und Kombinationen davon, umfasst.

6. Mundgerechtes Produkt auf Kohlenhydratbasis nach Anspruch 1, wobei das mundgerechte Produkt auf Kohlenhydratbasis einen Energiegehalt von etwa 30 kcal bis etwa 45 kcal umfasst und wobei mindestens 70 % des Energiegehalts des mundgerechten Produkts auf Kohlenhydratbasis von den Kohlenhydraten stammen.

7. Mundgerechtes Produkt auf Kohlenhydratbasis nach Anspruch 1, wobei der Teiganteil eine Proteinquelle aufweist, die dem mundgerechten Produkt etwa 20 Gew.-% bis etwa 40 Gew.-% Protein bezogen auf das Gewicht des Produkts bereitstellt.

8. Mundgerechtes Produkt auf Kohlenhydratbasis nach Anspruch 2, wobei die Proteinquelle eine Proteinmischung umfasst, die Sojaproteinisolate, Molkeproteinisolate, Calciumcaseinat und Kombinationen davon umfasst.

9. Mundgerechtes Produkt auf Kohlenhydratbasis nach Anspruch 1, wobei der Teiganteil ferner eine Fettquelle umfasst, wobei die Fettquelle etwa 25 % der Energie des mundgerechten Produkts bereitstellt.

10. Mundgerechtes Produkt auf Kohlenhydratbasis nach Anspruch 1, wobei der Teiganteil ferner eine Fettquelle umfasst, wobei die Fettquelle Fett in einer Menge von bis zu etwa 9 g/300 cal pro mundgerechtem Produkt auf Proteinbasis bereitstellt.

11. Mundgerechtes Produkt auf Kohlenhydratbasis nach Anspruch 1, wobei der Teiganteil eine Proteinquelle aufweist, die dem mundgerechten Produkt auf Proteinbasis etwa 2 g bis etwa 4 g Protein pro mundgerechtem Produkt auf Proteinbasis bereitstellt.

12. Verfahren zum Bereitstellen von Nahrung für einen Sportler, wobei das Verfahren die folgenden Schritte umfasst: Bereitstellen eines mundgerechten Produkts auf Kohlenhydratbasis, das einen Teiganteil, der eine Kohlenhydratquelle umfasst, die ein Verhältnis von glukogenen:fructogenen Kohlenhydraten im Bereich von etwa 1,5 bis etwa 2,5 aufweist, wobei mindestens 60 % des Energiegehalts des mundgerechten Produkts auf Kohlenhydratbasis von der Kohlenhydratquelle stammt, eine von dem Teiganteil umschlossene Füllung und Natrium umfasst; und Bereitstellen von personalisierten Richtlinien für den Verzehr des mundgerechten Produkts auf Kohlenhydratbasis, wobei die personalisierten Richtlinien die empfohlene Menge des vor und während des Trainings zu verzehrenden mundgerechten Produkts auf Kohlenhydratbasis basierend auf mindestens einem von einem typischen Merkmal des Sportlers und einem Trainingsplan des Sportlers angeben, wobei das mundgerechte Produkt auf Kohlenhydratbasis ausgewählt ist aus der Gruppe, bestehend aus denjenigen, die in einem der Ansprüche 1 bis 11 beansprucht werden.

13. Verfahren nach Anspruch 12, wobei das typische Merkmal des Sportlers ausgewählt ist aus der Gruppe bestehend aus Gewicht, Größe, Alter, Geschlecht und Kombinationen davon.

14. Verfahren nach Anspruch 12, wobei der Trainingsplan ausgewählt ist aus der Gruppe, bestehend aus Laufen, Schwimmen, Radfahren, Wandern, American Football, Basketball, Baseball, Fußball und Kombinationen davon.

15. Verfahren nach Anspruch 12, wobei die persönlichen Richtlinien ferner auf der Dauer des Trainingsplans des Sportlers basieren.

16. Verfahren nach Anspruch 12, wobei der Trainingsplan basierend auf einer Sportart festgelegt wird oder wobei der Trainingsplan basierend auf einem persönlichen Ziel festgelegt wird.

17. Verfahren nach Anspruch 16, wobei das persönliche Ziel ausgewählt ist aus der Gruppe bestehend aus Gewichtsabnahme, Muskelaufbau und Kombinationen davon.

18. Verfahren nach Anspruch 12, wobei die personalisierten Richtlinien die empfohlene Menge des nach dem Training während der Erholung zu verzehrenden mundgerechten Produkts auf Kohlenhydratbasis basierend auf mindestens einem von dem typischen Merkmal des Sportlers und dem Trainingsplan des Sportlers angeben.

19. Verfahren nach Anspruch 12, das ferner die Steigerung der Leistung eines Sportlers umfasst oder ferner das Verbessern der Erholung eines Sportlers nach dem Training umfasst.

20. Verfahren nach Anspruch 12, das ferner den Verkauf eines mundgerechten Produkts auf Kohlenhydratbasis umfasst, wobei das Verfahren ferner die folgenden Schritte umfasst:
Bereitstellen einer Vielzahl mundgerechter Produkte auf Kohlenhydratbasis in einer Packung und Verkauf der Packung des mundgerechten Produkts auf Kohlenhydratbasis und der Richtlinien an einen Sportler.

21. Nahrungskit, das mehrere mundgerechte Produkte auf Kohlenhydratbasis und personalisierte Richtlinien bezüglich der Anzahl an vom Sportler vor und während des Trainings zu verzehrenden mundgerechten Produkte auf Kohlenhydratbasis umfasst, wobei die mundgerechten Produkte auf Kohlenhydratbasis einen Teiganteil, der eine Kohlenhydratquelle umfasst, die ein Verhältnis von glukogenen:fructogenen Kohlenhydraten im Bereich von etwa 1,5 bis etwa 2,5 umfasst, wobei mindestens 60 % des Energiegehalts des mundgerechten Produkts auf Kohlenhydratbasis von der Kohlenhydratquelle stammt, eine von dem Teiganteil umschlossene Füllung und Natrium umfassen, wobei das mundgerechte Produkt auf Kohlenhydratbasis ausgewählt ist aus der Gruppe bestehend aus denjenigen, die in einem der Ansprüche 1 bis 11 beansprucht werden.

22. Nahrungskit nach Anspruch 21, wobei die personalisierten Richtlinien mindestens eines der Folgenden angeben:
die empfohlene Menge des vor und während des Trainings zu verzehrenden mundgerechten Produkts auf Kohlenhydratbasis basierend auf einer körperlichen Eigenschaft des Sportlers oder
die für den Sportler empfohlene Menge an mundgerechtem Produkt auf Kohlenhydratbasis vor und während des Trainings basierend auf dem Trainingsplan des Sportlers.

## Revendications

1. Produit à base de glucide de type bouchée, comprenant : une portion de pâte ayant une source de glucide comprenant un rapport de glucide glucogénique:fructogénique allant d'environ 1,5 à environ 2,5 avec au moins 60 % de la teneur en énergie du produit à base de glucide de type bouchée provenant de la source de glucide ; et une garniture enveloppée par la portion de pâte, dans lequel le sodium est compris entre environ 200 mg et environ 400 mg de sodium par 100 g du produit à base de glucide de type bouchée, dans lequel la garniture est semi-liquide et dans lequel la garniture comprend d'environ 10 % à environ 20 % en poids du produit.

2. Produit à base de glucide de type bouchée selon la revendication 1, dans lequel la portion de pâte, la garniture ou la portion de pâte et la garniture comprennent en outre individuellement au moins un des éléments suivants : une matière grasse, une fibre, une protéine, une matière particulaire, un ingrédient actif, un arôme et des combinaisons de ceux-ci.

3. Produit à base de glucide de type bouchée selon la revendication 2, dans lequel l'ingrédient actif est l'acide linoléique conjugué.

4. Produit à base de glucide de type bouchée selon la revendication 1, comprenant en outre un enrobage.

5. Produit à base de glucide de type bouchée selon la revendication 4, l'enrobage comprenant en outre une pluralité de matières particulaires choisies dans le groupe constitué de noix, fruit, avoine, miettes de céréale croustillantes, flocons, chapelure et des combinaisons de ceux-ci.

6. Produit à base de glucide de type bouchée selon la revendication 1, dans lequel le produit à base de glucide de type bouchée comprend une teneur en énergie d'environ 30 kcal à environ 45 kcal et dans lequel au moins 70 % de la teneur en énergie du produit à base de glucide de type bouchée provient des glucides.

7. Produit à base de glucide de type bouchée selon la revendication 1, dans lequel la portion de pâte possède une source de protéine qui fournit au produit de type bouchée d'environ 20 % à environ 40 % de protéine en poids du produit.

8. Produit à base de glucide de type bouchée selon la revendication 2, dans lequel la source de protéine comprend un mélange de protéine comprenant des isolats de protéine de soja, des isolats de protéine de lactosérum, du caséinate de calcium et des combinaisons de ceux-ci.

9. Produit à base de glucide de type bouchée selon la revendication 1, la portion de pâte comprenant en outre une source de matière grasse, dans lequel la source de matière grasse fournit environ 25 % de l'énergie du produit de type bouchée.

10. Produit à base de glucide de type bouchée selon la revendication 1, la portion de pâte comprenant en outre une source de matière grasse, dans lequel la source de matière grasse fournit de la matière grasse en une quantité de jusqu'à environ 9 g/300 cal par produit à base de glucide de type bouchée.

11. Produit à base de glucide de type bouchée selon la revendication 1, dans lequel la portion de pâte possède une source de protéine qui fournit au produit à base de glucide de type bouchée d'environ 2 g à environ 4 g de protéine par produit à base de glucide de type bouchée.

12. Procédé de fourniture de nutrition à un athlète, le procédé comprenant les étapes consistant à : fournir un produit à base de glucide de type bouchée, comprenant une portion de pâte comprenant une source de glucide comprenant un rapport de glucide glucogénique:fructogénique allant d'environ 1,5 à environ 2,5 avec au moins 60 % de la teneur en énergie du produit à base de glucide de type bouchée provenant de la source de glucide, une garniture enveloppée par la portion de pâte et du sodium ; et fournir des directives personnalisées pour la consommation du produit à base de glucide de type bouchée, dans lequel les directives personnalisées fournissent la quantité recommandée du produit à base de glucide de type bouchée à consommer avant et pendant l'exercice, sur la base d'au moins un élément parmi une caractéristique de l'athlète et un régime d'entraînement de l'athlète, dans lequel le produit à base de glucide de type bouchée est choisi dans le groupe constitué des éléments revendiqués dans l'une quelconque de la revendication 1 à la revendication 11.

13. Procédé selon la revendication 12, dans lequel la caractéristique de l'athlète est choisie dans le groupe constitué de poids, taille, âge, genre et des combinaisons de ceux-ci.

14. Procédé selon la revendication 12, dans lequel le régime d'entraînement est choisi dans le groupe constitué de course à pied, natation, cyclisme, randonnée, football américain, basketball, baseball, football et des combinaisons de ceux-ci.

15. Procédé selon la revendication 12, dans lequel les directives personnelles sont en outre basées sur la durée du régime d'entraînement de l'athlète.

16. Procédé selon la revendication 12, dans lequel le régime d'entraînement est déterminé sur la base d'un sport ou dans lequel le régime d'entraînement est déterminé sur la base d'un objectif personnel.

17. Procédé selon la revendication 16, dans lequel l'objectif personnel est choisi dans le groupe constitué de perte de poids, développement musculaire et des combinaisons de ceux-ci.

18. Procédé selon la revendication 12, dans lequel les directives personnalisées fournissent la quantité recommandée du produit à base de glucide de type bouchée à consommer après l'exercice pendant la récupération, sur la base d'au moins un élément parmi la caractéristique de l'athlète et le régime d'entraînement de l'athlète.

19. Procédé selon la revendication 12, comprenant en outre l'amélioration des performances d'un athlète ou comprenant en outre l'amélioration de la récupération d'un athlète après l'exercice.

20. Procédé selon la revendication 12, comprenant en outre la vente d'un produit à base de glucide de type bouchée, le procédé comprenant en outre les étapes consistant à:
fournir une pluralité des produits à base de glucide de type bouchée dans un emballage et vendre l'emballage de produits à base de glucide de type bouchée et les directives à un athlète.

21. Lot nutritionnel comprenant une pluralité de produits à base de glucide de type bouchée et des directives personnalisées sur le nombre de produits à base de glucide de type bouchée qu'un athlète devrait consommer avant et pendant l'exercice, les produits à base de glucide de type bouchée comprenant une portion de pâte comprenant une source de glucide comprenant un rapport de glucide glucogénique:fructogénique allant d'environ 1,5 à environ 2,5 avec au moins 60 % de la teneur en énergie du produit à base de glucide de type bouchée provenant de la source de glucide, une garniture enveloppée par la portion de pâte et du sodium, dans lequel le produit à base de glucide de type bouchée est choisi dans le groupe constitué des éléments selon l'une quelconque de la revendication 1 à la revendication 11.

22. Lot nutritionnel selon la revendication 21, dans lequel les directives personnalisées fournissent au moins un des éléments suivants :
la quantité recommandée du produit à base de glucide de type bouchée à consommer avant et pendant l'exercice sur la base d'une caractéristique physique de l'athlète ; ou
la quantité recommandée du produit à base de glucide de type bouchée pour l'athlète avant et pendant l'exercice sur la base du régime d'entraînement de l'athlète.
